# EUROPEAN PATENT SPECIFICATION

(11) **EP 3 336 268 B1**
(45) Date of publication and mention of the grant of the patent: **15.01.2020**
(21) Application number: 17208074.9
(22) Date of filing: 28.01.2014
(51) Int. Cl.: E03D 11/16, E03D 11/14

(54) **SEALING CONNECTOR FOR PIPES, SUCH AS FOR OUTLET PIPES**
DICHTUNGSVORRICHTUNG ZUM ANSCHLUSS AN EIN ROHR, WIE ETWA EIN AUSLAUFROHR
CONNECTEUR D'ÉTANCHÉEITÉ POUR RACCORD DE TUYAUX DE SORTIE

(30) Priority: 01.02.2013 NL 2010226
(43) Date of publication of application: 20.06.2018
(62) Divisional of application: 14152930.5
(73) Proprietor: Easy Sanitary Solutions B.V., 7575 BK Oldenzaal (NL)
(72) Inventor: Keizers, Jurgen Hendrik Peter Joseph, 7575 BK Oldenzaal (NL)
(74) Representative: 't Jong, Bastiaan Jacob

(56) References cited:
- EP-A2- 1 688 549
- DE-U1- 29 604 043
- JP-A- H0 813 594
- JP-A- H04 285 228
- US-A- 961 685
- US-A- 2 976 543
- US-A- 3 349 412
- US-A1- 2012 079 648

## Description

The invention relates to a device according to the preamble of claim 1.

Such a device is for example known from US 3349412 and from US 2976543.

When sanitary spaces are installed or renovated it may be the case in determined situations that arranged in a floor or wall there is an outlet pipe to which a flexible layer, such as a sealing membrane, and a drain have to be connected. A coupling piece would then normally be arranged on the pipe. The sealing membrane can then be attached to this coupling piece. Further provided in a usual coupling piece is a rubber sleeve to which the drain can then be connected. It may however be the case that there is insufficient space to arrange such a coupling piece on the pipe.

It may also be the case that a flexible sleeve has to be connected in reliable manner to a pipe. A rubber sleeve is often used when for instance a pipe of a smaller diameter has to be connected to an existing pipe. This rubber sleeve must be arranged fixedly on the existing pipe in order to prevent the sleeve being pushed away when the pipe of smaller diameter is inserted.

In the prior art the rubber sleeves are usually made of a flexible plastic such as EPDM. The drawback of such a material is that there are few suitable adhesives with which other parts can be adhered. Adhesive is rapidly affected by the plasticizers in the EPDM, whereby the adhesion deteriorates. It is therefore very difficult to glue an EPDM sleeve directly into an existing housing or to adhere a sealing membrane to a sleeve.

It is further known to provide an O-ring in an outlet pipe whereby an outflow of for instance a drain can be connected sealingly to the outlet pipe. Should the O-ring be forgotten however, this is likely to go unnoticed, whereby a poor connection is obtained between drain and outlet pipe.

It is now an object of the invention to reduce or even obviate the above stated drawbacks.

This objective is achieved according to the invention with a device according to independent claim 1.

Provided according to the invention is a combination of a flexible sleeve and a peripheral flange arranged thereon on which a sealing membrane is arranged in reliable manner. The use of a sleeve ensures that the sleeve cannot be forgotten during assembly. This is because without a sleeve a drain will lie much too loosely in an outlet pipe. The installer will hereby be alerted to the fact that something is missing. In the case a sealing membrane is formed on the sleeve it is then also easily possible to check whether the sealing membrane has been arranged or not.

The flexible sleeve has the additional advantage that a seal is hereby obtained over a determined length in the outlet pipe. Possible fouling of the outlet pipe wall or the sleeve will hereby have little effect.

In an embodiment not according to the invention the form-retaining peripheral flange is formed by a ring vulcanized onto a sealing membrane. The vulcanizing results in a firm connection between the sealing membrane and the sleeve. In addition, the rubber "fuses" and penetrates here into small cavities, such as between the fibres of a sealing membrane provided with a web, whereby capillary action cannot occur. It is optionally also possible to provide the sealing membrane with a web-free zone onto which the rubber can be vulcanized.

The vulcanized ring can be arranged on one side against the membrane, although the ring can also enclose the edge of the membrane. A further advantage is that the vulcanized ring can easily absorb possible stretch in the membrane.

The vulcanized ring is preferably arranged on either side of the sealing membrane. Arranging the vulcanized ring on either side ensures that the vulcanized rubber penetrates properly into the sealing membrane and moisture can no longer creep past the ring via the sealing membrane through capillary action.

An additional advantage of a vulcanized ring is that it can more easily be bent against a wall or can follow a recess in the floor. Because the sleeve is pressed into the outlet pipe and is fixed using an outflow of an outlet pipe, the deformed form-retaining ring cannot press the sleeve out of the pipe later.

In a possible further embodiment of the device not according to the invention the form-retaining peripheral flange is a metal plate. The flexible sleeve is preferably vulcanized onto the metal plate.

A strong connection is realized by vulcanizing the flexible sleeve onto the metal plate. The metal plate can then be used as a base surface for adhering for instance a sealing membrane.

In addition, a smaller overall height of the sleeve and the form-retaining peripheral flange is also obtained because of the vulcanizing.

The advantage of this device not according to the invention is that the cement floor with an outlet pipe therein can be made first. The slope in the cement floor can be made in simple manner and is not interrupted, as in the prior art, by flanges arranged on the outlet pipe. After the cement floor has been arranged the sleeve can be inserted into the outlet pipe, whereby a good seal is immediately obtained.

According to the present invention, the flexible sleeve has a peripheral edge and the form-retaining peripheral flange is formed by two ring parts which are arranged on each other and between which the peripheral edge of the flexible sleeve is enclosed.

Enclosing the peripheral edge of the flexible sleeve between two ring parts arranged on each other brings about a connection between two different materials in a mechanical manner. It is thus possible for the flexible sleeve to be of EPDM rubber while the ring parts are of a readily adherable material such as PVC.

In addition, a water-tight connection is obtained between the sleeve and the ring parts when the peripheral flange is compressed to some extent when the ring parts are brought together.

With this construction it is moreover possible to effect a reliable connection which can even be realized on site.

In an embodiment of the device according to the invention a cavity with a radially inward directed opening is formed between the ring parts and the peripheral flange of the flexible sleeve is directed radially outward.

Owing to the radial direction of the flange the connection between the peripheral flange and the ring parts will be minimally loaded when a pipe part or drain is inserted axially.

A thickened portion is preferably arranged on the peripheral flange. This thickened portion ensures that after the ring parts have been brought together the flange can no longer be pulled out of the ring parts as a result of a form-fitting seal between the thickened portion and the cavity in the ring parts.

In another embodiment of the device according to the invention a downward directed peripheral wall is provided on one of the ring parts for the purpose of coupling to a pipe.

The device according to the invention can be glued with the downward directed peripheral wall onto an existing pipe.

In a preferred embodiment of the device according to the invention a second downward directed peripheral wall is provided concentrically on one of the ring parts. The second downward directed peripheral wall makes it possible to arrange a specific embodiment according to the invention on pipes of two different diameters.

In yet another embodiment of the device according to the invention the ring parts are attached to each other by ultrasonic welding.

The flexible sleeve is preferably of EPDM rubber. In addition, a flexible layer can be arranged on the two ring parts arranged on each other. The advantage of an EPDM rubber sleeve is that it can be vulcanized at a low temperature so that the sealing membrane is not damaged by the vulcanizing temperature.

These and other features of the invention are further elucidated with reference to the accompanying drawings.
Figure 1 shows a cross-sectional view of a first embodiment of a device according to the invention.
Figure 2 shows a cross-sectional view of a device according to the invention; no sealing membrane is shown.
Figure 3 shows a cross-sectional view of a device according to the invention; no sealing membrane is shown.
Figure 4 shows a cross-sectional view of an embodiment of a device not according to the invention.
Figure 5 shows a cross-sectional view of an embodiment of a device not according to the invention.

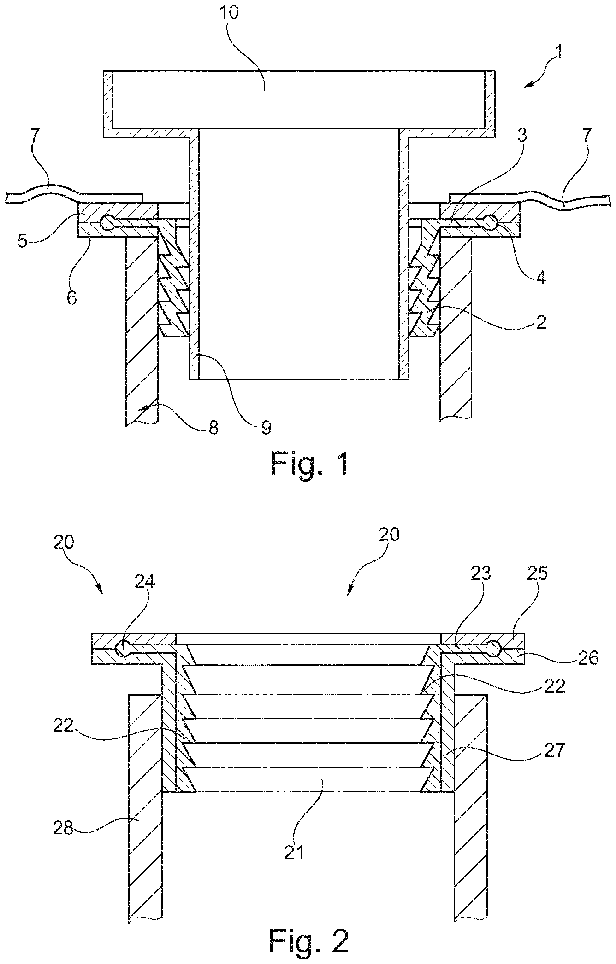

Figure 1 shows a cross-sectional view of a first embodiment 1 according to the invention. Device 1 has a rubber sleeve 2 which is provided on both the outer side and on the inner side with ridges. A peripheral flange 3 with a thickened portion 4 is provided on the upper side of sleeve 2.

Peripheral flange 3 is enclosed between an upper ring part 5 and a lower ring part 6 which are adhered to each other. A sealing membrane 7 can for instance be glued onto ring parts 5, 6 in simple manner because a material can be chosen for ring parts 5, 6 which differs from the material of sleeve 2.

In this embodiment device 1 is inserted into a pipe 8. The ridges on the outer side of rubber sleeve 2 provide for a watertight seal between sleeve 2 and pipe 8. The ridges on the outer side of rubber sleeve 2 can optionally be omitted if the diameter corresponds closely to the inner diameter of pipe 8. Ring parts 5, 6 ensure that sleeve 2 cannot be pushed away into pipe 8 when outflow 9 of a drain 10 is for instance inserted into sleeve 2.

The advantage of the device according to the invention is that rubber sleeve 2, and thereby sealing membrane 7, cannot be overlooked during installation, since otherwise the drain 10 can only too obviously not be inserted properly into pipe 8.

Figure 2 shows a device 20 according to the invention. Provided in this embodiment 20 is a sleeve 21 which has ridges 22 only on the inner side. A peripheral flange 23 with a thickened portion 24 is further provided on the upper side.

Peripheral flange 23 is enclosed and clamped between an upper ring part 25 and a lower ring part 26. Lower ring part 26 further has a downward directed peripheral wall 27 with which device 20 can be glued into a pipe 28.

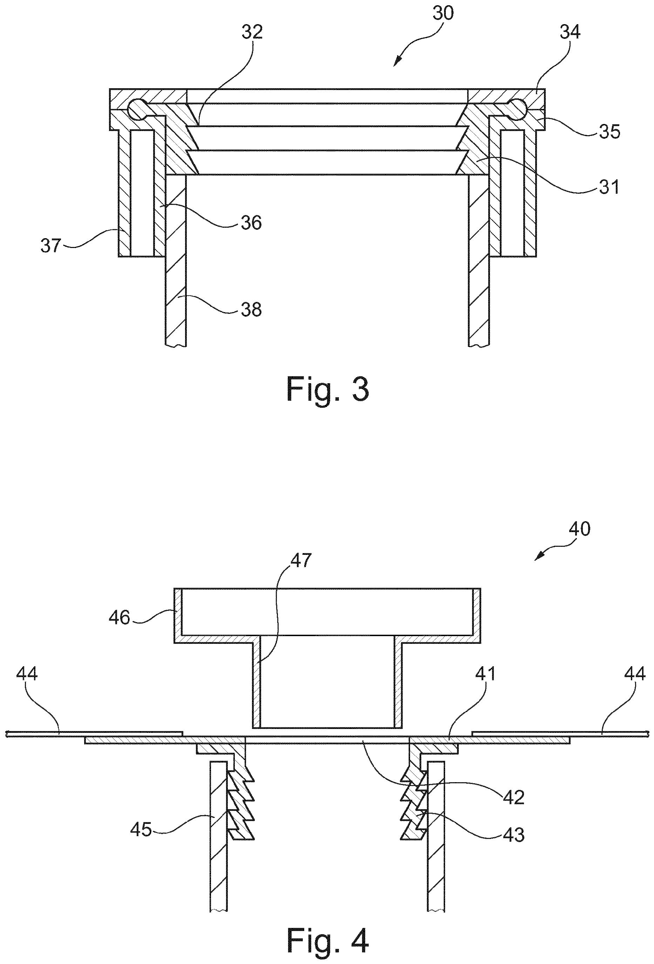

Figure 3 shows a device 30 according to the invention. Device 30 here also has a sleeve 31 provided on the inner side with ridges 32.

Provided on the upper side of sleeve 31 is a flange 33 which is enclosed between an upper ring part 34 and a lower ring part 35.

The lower ring part 35 has two concentrically arranged, downward directed peripheral walls 36, 37. In this shown embodiment peripheral wall 36 engages on the outer side of a pipe 38. Sleeve 32 lies here on pipe 38. It is hereby possible to slide into device 30 another pipe with an inner diameter substantially the same as the inner diameter of pipe 38. The ridges 32 of sleeve 31 provide for a good seal here. In addition, it is possible to glue a sealing membrane to ring parts 34, 35.

More peripheral walls 36, 37 can optionally be provided which can be cut away depending on the diameter of pipe 38.

Figure 4 shows a cross-sectional view of an embodiment 40 of a device not according to the invention.

In this embodiment 40 a rubber sleeve 43 is vulcanized onto a metal plate 41 with a central opening 42. A sealing membrane 44 can be glued easily to metal plate 41.

During use the rubber sleeve 43 is pressed into an outlet pipe 45 or siphon. A good sealing of sealing membrane 44 on outlet pipe 45 is hereby obtained immediately.

A drain or shower drain 46 can then be inserted with outflow 47 from above into sleeve 43, whereby a good sealing of shower drain 46 on outlet pipe 45 is also realized.

Metal plate 41 can optionally be bent so that, when a drain is arranged close to a wall, sealing membrane 44 can run upward along the wall.

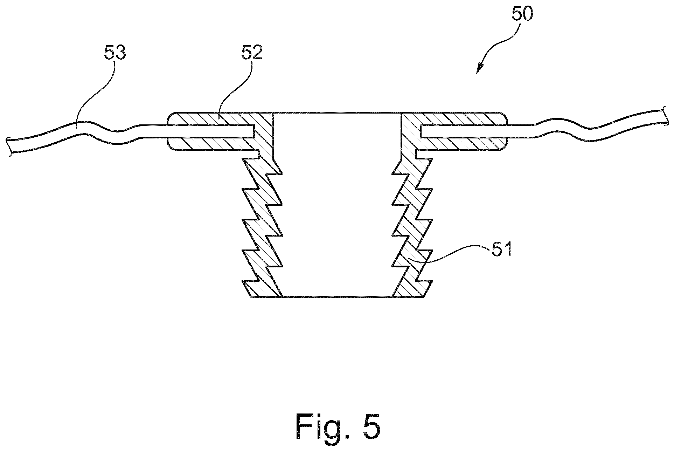

Figure 5 shows an embodiment 50 of a device not according to the invention. This embodiment 50 has a flexible sleeve 51 with a form-retaining flange 52 thereon which is vulcanized around a sealing membrane 53. The vulcanizing thus brings the rubber into direct contact with the sealing membrane such that moisture can no longer pass between the sealing membrane and the rubber. This is a particularly great advantage in the case of a sealing membrane provided with a web layer.

In a further variant the rubber sleeve can take a hollow form and be provided on the upper side with small openings in order to nevertheless drain possibly leaking water that gets onto the sealing membrane to the outlet pipe via the small openings and the hollow sleeve.

## Claims

1. Device (1; 20; 30) for connecting to a pipe (8; 28; 38), such as an outlet pipe, the device comprising:
- a flexible sleeve (2; 22; 31); and
- a form-retaining peripheral flange (5, 6) which is arranged on the sleeve (2; 22; 31), wherein the flexible sleeve (2; 22; 31) has a peripheral edge (3; 23),
**characterized in that**
a sealing membrane (7) is arranged on the form-retaining peripheral flange (5, 6; 25, 26; 24, 35);
wherein the form-retaining peripheral flange (5, 6; 25, 26; 24, 35) is formed by two ring parts (5, 6; 25, 26; 24, 35) which are arranged on each other and between which the peripheral edge (3; 23) of the flexible sleeve (2; 22; 31) is enclosed.

2. Device (1; 20; 30) as claimed in claim 1, wherein a cavity with a radially inward directed opening is formed between the ring parts (5, 6; 25, 26; 24, 35) and wherein the peripheral edge (3; 23) of the flexible sleeve (2; 22; 31) is directed radially outward.

3. Device (1; 20; 30) as claimed in any of the foregoing claims, wherein a thickened portion (4; 24) is arranged on the peripheral flange (3; 23).

4. Device (20) as claimed in any of the foregoing claims, wherein a downward directed peripheral wall (27) is provided on one of the ring parts (26) for the purpose of coupling to a pipe (28).

5. Device (30) as claimed in claim 4, wherein a second downward directed peripheral wall (37) is provided concentrically on one of the ring parts (35).

6. Device (1; 20; 30) as claimed in any of the foregoing claims, wherein the ring parts (5, 6; 25, 26; 24, 35) are attached to each other by ultrasonic welding.

7. Device (1; 20; 30) as claimed in any of the foregoing claims, wherein the flexible sleeve (2; 22; 31) is of EPDM rubber.

## Patentansprüche

1. Vorrichtung (1; 20; 30) zum Verbinden mit einem Rohr (8; 28; 38), wie beispielsweise einem Auslassrohr, wobei die Vorrichtung umfasst:
- eine flexible Manschette (2; 22; 31); und
- einen formstabilen Umfangsflansch (5, 6), der an der Manschette (2; 22; 31) angeordnet ist, wobei die flexible Manschette (2; 22; 31) eine Umfangskante (3; 23) aufweist,
**dadurch gekennzeichnet, dass**
eine Dichtungsmembran (7) auf dem formstabilen Umfangsflansch (5, 6; 25, 26; 24, 35) angeordnet ist;
wobei der formstabile Umfangsflansch (5, 6; 25, 26; 24, 35) durch zwei Ringteile (5, 6; 25, 26; 24, 35) gebildet ist, die aufeinander angeordnet sind und zwischen denen die Umfangskante (3; 23) der flexiblen Manschette (2; 22; 31) eingeschlossen ist.

2. Vorrichtung (1; 20; 30) nach Anspruch 1, wobei zwischen dem Ringteil (5, 6; 25, 26; 24, 35) ein Hohlraum mit einer radial nach innen gerichteten Öffnung ausgebildet ist und wobei die Umfangskante (3; 23) der flexiblen Manschette (2; 22; 31) radial nach außen gerichtet ist.

3. Vorrichtung (1; 20; 30) nach einem der vorstehenden Ansprüche, wobei ein verdickter Abschnitt (4; 24) auf dem Umfangsflansch (3; 23) angeordnet ist.

4. Vorrichtung (20) nach einem der vorstehenden Ansprüche, wobei eine nach unten gerichtete Umfangswand (27) an einem der Ringteile (26) zum Zwecke einer Koppelung mit einem Rohr (28) vorgesehen ist.

5. Vorrichtung (30) nach Anspruch 4, wobei eine zweite nach unten gerichtete Umfangswand (37) konzentrisch auf einem der Ringteile (35) bereitgestellt ist.

6. Vorrichtung (1; 20; 30), nach einem der vorstehenden Ansprüche, wobei die Ringteile (5, 6; 25, 26; 24, 35) durch Ultraschallschweißen aneinander befestigt sind.

7. Vorrichtung (1; 20; 30) nach einem der vorstehenden Ansprüche, wobei die Manschette Hülse (2; 22; 31) aus EPDM-Kautschuk besteht.

## Revendications

1. Dispositif (1 ; 20 ; 30) destiné à être raccordé à un tuyau (8 ; 28 ; 38), tel qu'un tuyau de sortie, le dispositif comprenant :
- un manchon souple (2 ; 22 ; 31) ; et
- une bride périphérique de maintien de forme (5, 6) qui est agencée sur le manchon (2 ; 22 ; 31), dans lequel le manchon souple (2 ; 22 ; 31) présente un bord périphérique (3 ; 23),
**caractérisé en ce que**
une membrane d'étanchéité (7) est agencée sur la bride périphérique de maintien de forme (5, 6 ; 25, 26 ; 24, 35) ;
dans lequel la bride périphérique de maintien de forme (5, 6 ; 25, 26 ; 24, 35) est formée de deux parties annulaires (5, 6 ; 25, 26 ; 24, 35) qui sont agencées l'une sur l'autre et entre lesquelles le bord périphérique (3 ; 23) du manchon souple (2 ; 22 ; 31) est enfermé.

2. Dispositif (1 ; 20 ; 30) selon la revendication 1, dans lequel une cavité avec une ouverture dirigée radialement vers l'intérieur est formée entre les parties annulaires (5, 6 ; 25, 26 ; 24, 35) et dans lequel le bord périphérique (3 ; 23) du manchon souple (2 ; 22 ; 31) est dirigé radialement vers l'extérieur.

3. Dispositif (1 ; 20 ; 30) selon l'une quelconque des revendications précédentes, dans lequel une partie épaissie (4 ; 24) est agencée sur la bride périphérique (3 ; 23).

4. Dispositif (20) selon l'une quelconque des revendications précédentes, dans lequel une paroi périphérique dirigée vers le bas (27) est prévue sur l'une des parties annulaires (26) en vue de son couplage à un tuyau (28).

5. Dispositif (30) selon la revendication 4, dans lequel une seconde paroi périphérique dirigée vers le bas (37) est prévue de manière concentrique sur l'une des parties annulaires (35).

6. Dispositif (1 ; 20 ; 30) selon l'une quelconque des revendications précédentes, dans lequel les parties annulaires (5, 6 ; 25, 26 ; 24, 35) sont attachées les unes aux autres par soudage par ultrasons.

7. Dispositif (1 ; 20 ; 30) selon l'une quelconque des revendications précédentes, dans lequel le manchon souple (2 ; 22 ; 31) est en caoutchouc EPDM.
